(19) Europäisches Patentamt
European Patent Office
Office européen des brevets

(11) EP 4 551 655 B1

(12) EUROPEAN PATENT SPECIFICATION

(45) Date of publication and mention of the grant of the patent:
**08.04.2026 Bulletin 2026/15**

(21) Application number: **23738545.5**

(22) Date of filing: **05.07.2023**

(51) International Patent Classification (IPC):
***C09D 5/04*** *(2006.01)* ***C08K 5/20*** *(2006.01)*
***C08G 18/28*** *(2006.01)* ***C08K 5/21*** *(2006.01)*
***C08K 5/41*** *(2006.01)*

(52) Cooperative Patent Classification (CPC):
(C-Sets available)
**C08K 5/20; C08G 18/2815; C08G 18/3228; C08G 18/6229; C08G 18/73; C08G 18/792; C08K 5/21; C08K 5/41; C08L 75/02; C09D 7/43; C09D 7/65; C09D 175/02;** C08K 2201/014 (Cont.)

(86) International application number:
**PCT/EP2023/068475**

(87) International publication number:
**WO 2024/008765 (11.01.2024 Gazette 2024/02)**

# (54) COMPOSITION COMPRISING A CYCLIC AMIDE

ZUSAMMENSETZUNG MIT EINEM CYCLISCHEN AMID

COMPOSITION COMPRENANT UN AMIDE CYCLIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.07.2022 EP 22183405**

(43) Date of publication of application:
**14.05.2025 Bulletin 2025/20**

(73) Proprietor: **BYK-Chemie GmbH
46483 Wesel (DE)**

(72) Inventors:
- **NAGELSDIEK, René
46483 Wesel (DE)**
- **FRIESE, Florian
46483 Wesel (DE)**
- **BÜHNE, Sylvia
46483 Wesel (DE)**
- **TIEMANN, Andre
46483 Wesel (DE)**
- **MUELLEMANN, Jasmin
46483 Wesel (DE)**
- **JOHANN, Meike
46483 Wesel (DE)**

(74) Representative: **Altana IP Department
Altana Management Services GmbH
Abelstraße 45
46483 Wesel (DE)**

(56) References cited:
**CA-A1- 2 352 660**
**US-A1- 2021 024 683**
**US-A1- 2022 145 101**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 175/02, C08K 5/20, C08K 5/21, C08K 5/41**

## Description

The invention relates to a composition comprising a cyclic amide, a solvent and a urea compound. It further relates to the use of the composition for controlling the rheology of a liquid composition, a liquid composition, and a coated article.

In the field of coating materials, adhesives, sealants, and molding compounds, as well as non-aqueous based oil-drilling fluids and the like, it is necessary to customize the rheological properties of such liquid systems, primarily through adjusting the viscosity. This can be done by the selection of binding agents, solvents and the concentration of pigments and/or fillers. Often, the addition of so-called rheology additives to these liquids is required. The effect of these additives lays in adjusting the rheological properties of the system, like the viscosity and the viscoelastic properties. By doing so, the system properties are usually improved with respect to sag resistance, improved storage stability (due to reduced settling of solid particles), or a general increase in viscosity, often referred to as "thickening".

The rheology of liquid systems is often controlled using clays, e. g., bentonites, and/or silicas, which may optionally be organically modified, hydrogenated castor oil, and polyamide waxes. A disadvantage of these rheology control auxiliaries is that they are mostly dry solids, which must be processed to a semi-finished form using solvents and shear forces, and/or introduced into the liquid system by means of targeted temperature control. Non-observance of these temperatures and/or appropriate incorporation conditions can lead not only to poor rheological performance, but also to detrimental properties of the products.

In case the liquid systems are coating compositions, these rheology control auxiliaries frequently lead to instances of clouding and haze in clear, transparent coatings. Moreover, operating with dry, powderous products, which cause dusts during processing, may be technologically unfavorable.

A liquid application alternative to these rheology control auxiliaries is provided by solutions of particular urea components as described for example in EP 1 188 779 A. Serving as solvent and/or carrier medium are typically polar/aprotic solvents. Alternatively, instead of classical organic diluents ionic liquids can be used as described in DE 102008059702 A.

A further aspect, which should be noted in connection with rheology control auxiliaries provided in liquid form, is the storage stability thereof. For instance, prolonged storage times or elevated storage stress, for example in the case of storage with temperature variations, can lead to reduced storage stability, accompanied by reduced efficacy in the target systems. Therefore, it is desirable that rheology control auxiliaries have a good storage stability and will not easily precipitate on storage.

To prevent early precipitation on storage from happening, small amounts of salts, especially halides such as LiCl are usually added, which act as a stabilizer. Since salts also give rise to numerous issues in application performance, especially in the case of halides such as LiCl, these ionic compounds have negative effects on properties such as influence on corrosion caused by the coating system, resistance of the coated material against environmental effects, discoloration, and whitening, pollution, or conductivity.

All these parameters mentioned above limit the choice of adequate preparations. The choice of suitable rheology control auxiliaries is therefore difficult since these especially have to be compatible with the later application systems and need to comply with a multiplicity of requirements. They have to show not only an improved rheological activity in the application system, but also a broad compatibility in application-relevant formulations as well. There is still an ongoing need to provide improved rheology additives. Using the improved rheology additive should lead to very reliable and increased thickening effects in various formulations while storage stability of these rheology control auxiliaries needs to be favorable.

Thus, it is a particular object of the present invention to provide a high-quality rheology control agent of good effectiveness, which is employable in numerous application systems. More particularly the intention was to find rheology control agents resulting in a pronounced anti-sag behavior. Another object of the invention was to provide a rheology control agent that leads to an improved storage stability and a further object of the invention is to provide a rheology control agent which is essentially devoid of salts.

Surprisingly it has been found that these objectives can be achieved by a composition comprising a cyclic amide comprising at least one amide NH group, a solvent, which is different from the cyclic amide comprising at least one amide NH group and wherein the solvent comprises at least one of an amide group and a sulfoxide group, wherein the amide nitrogen of the amide group has two substituents, wherein the substituents are selected from aliphatic and aromatic groups, and a urea compound, having a number average molecular weight of at least 350 g/mol.

The urea compound is a compound, which comprises at least one urea group. In one embodiment, the urea compound is a urea-urethane-compound. In another embodiment, the urea component comprises molecules containing at least one urea group and at least one urethane group. In another embodiment, the urea component comprises molecules containing at least one urea group and at least two urethane groups. In another embodiment, the urea component comprises molecules containing at least two urea groups; in a different embodiment the urea compound comprises two urea and two urethane groups; in yet another embodiment, the urea component comprises molecules

containing at least four urea or more than four urea groups. In a different embodiment, the urea component comprises molecules containing at least two urea groups and at least two urethane groups. In a different embodiment of the invention, urethane groups may even be absent.

Suitably, urea-based compounds according to claim 11 of WO 2015/158407, claim 13 of WO 2015/158407, claim 16 of WO 2015/158407 and claim 1 of EP 1396510 A1 are employed.

A preferred class of urea compounds can be described according to the following general formula (U-1)

$$R31\text{-}[R33\text{-}Z\text{-}R34\text{-}W\text{-}]_n\text{-}R32 \qquad (U\text{-}1)$$

where

R31 and R32 independently of one another and independently of each occurrence represent a branched or unbranched, saturated or unsaturated organic radical which contains 1 to 100 carbon atoms and which has not more than one urea group each and not more than one urethane group each,

R33 and R34 independently of one another and independently of each occurrence represent branched or unbranched polyester radicals containing 1 to 300 carbon atoms and optionally containing ether groups, branched or unbranched polyether radicals containing 2 to 300 carbon atoms, branched or unbranched polyamide radicals containing 1 to 300 carbon atoms, polysiloxane radicals containing 3 to 100 silicon atoms, branched or unbranched C2 to C22 alkylene radicals, branched or unbranched C2 to C22 cycloalkylene radicals branched or unbranched C2 to C18 alkenylene radicals, C6 to C12 arylene radicals and/or branched or unbranched C7 to C22 arylalkylene radicals,

Z and W independently of one another represent NH-CO-O and/or NH-CO-NH, in case of multiple occurrences of Z and W, Z and W represent independently the groups described above,

n represents an integer from 1 to 150, preferably 2 to 150, in case of multiple occurrence of n, n independently represents an integer from 1 to 150, preferably 2 to 150.

In another preferred embodiment the urea compound is selected from the general formulas (U-2a), (U-2b), (U-2c), (U-2d), and (U-2e).

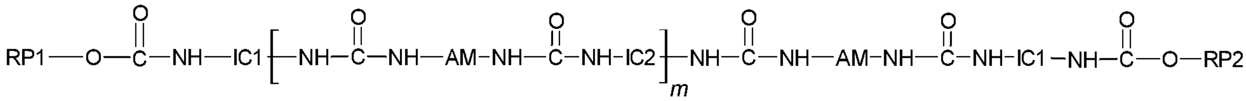

(U-2a)

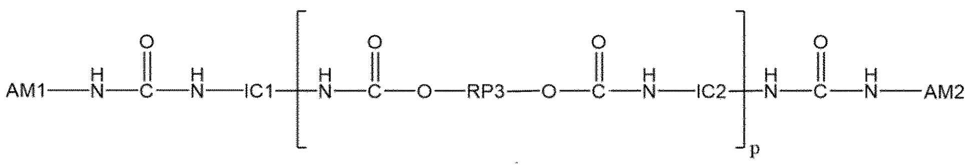

(U-2b)

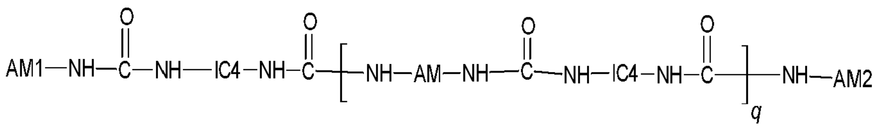

(U-2c)

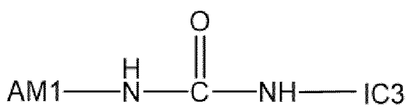

(U-2d)

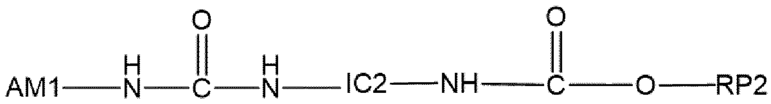

(U-2e)

where

AM is selected from a linear or branched, saturated or unsaturated, aliphatic, cycloaliphatic, aromatic or aliphatic-aromatic organic radical having 2 to 50 C atoms, in case of multiple occurrence of AM, AM is independently selected from a linear or branched, saturated or unsaturated, aliphatic, cycloaliphatic, aromatic or aliphatic-aromatic organic radical having 2 to 50 C atoms,

AM1 and AM2 independently of one another represent a linear or branched, saturated or unsaturated, aliphatic, aromatic or aliphatic-aromatic organic radical having 1 to 50 C atoms, in case of multiple occurrence of AM1 and AM2, AM1 and AM2 represent independently the radical described above,

IC1 and IC2 independently of one another represent a linear or branched, saturated or unsaturated, aliphatic, aromatic or aliphatic-aromatic hydrocarbon radical having 2 to 40 C atoms, in case of multiple occurrence of IC1 and IC2, IC1 and IC2 represent independently the radical described above,

IC3 represents a linear or branched, saturated or unsaturated, aliphatic, aromatic or aliphatic-aromatic hydrocarbon radical having 2 to 24 carbon atoms, in case of multiple occurrence of IC3, IC3 independently represents a linear or branched, saturated or unsaturated, aliphatic, aromatic or aliphatic-aromatic hydrocarbon radical having 2 to 24 carbon atoms,

IC4 is selected from a group as described for IC1 and IC2 or a urethane group containing segment having the structure

-[IC2-NH-(C=O)-O-RP3-O-(C=O)-NH-IC2]-

in which RP3 represents a linear or branched, saturated or unsaturated, aliphatic, aromatic or aliphatic-aromatic organic radical having 2 to 24 C atoms and/or by a (poly)ether radical having 1 to 120 ether oxygen atoms and/or by a polyamide radical having 1 to 100 amide groups and/or by a polysiloxane radical having 3 to 100 silicon atoms and/or by a polyester radical having 1 to 100 ester groups and optionally containing ether groups, in case of multiple occurrence of RP3, RP3 independently represents the above mentioned radicals.

RP1 and RP2 independently of one another represent a linear or branched, saturated or unsaturated, aliphatic, aromatic or aliphatic-aromatic organic radical having 1 to 24 C atoms and/or by a polyether radical having 1 to 120 ether oxygen atoms and/or by a polyester radical having 1 to 100 ester groups and optionally containing ether groups, and/or by a polyamide radical having 1 to 100 amide groups, and/or by a polysiloxane radical having 3 to 100 silicon atoms, in case of multiple occurrence of RP1 and RP2, RP1 and RP2 represent independently the radicals described above,

RP3 represents a linear or branched, saturated or unsaturated, aliphatic, aromatic or aliphatic-aromatic organic radical having 2 to 24 C atoms and/or by a (poly)ether radical having 1 to 120 ether oxygen atoms and/or by a polyamide radical having 1 to 100 amide groups and/or by a polysiloxane radical having 3 to 100 silicon atoms and/or by a polyester radical having 1 to 100 ester groups and optionally containing ether groups, in case of multiple occurrence of RP3, RP3 independently represents the above mentioned radicals and

m is an integer from 0 to 20, preferably from 1 to 20, more preferably from 1 to 5. p represents 0 and/or 1. q is an integer from 0 to 20.

Preferably, the urea compound has a structure according to formula (U-2a) in which

RP1 is selected from a hydrocarbyl group having 4 to 24 carbon atoms or a polyether segment having up to 50 alkylene oxide repeating units, preferably a segment Q-(O-AO)$_r$ in which Q is a C1 to C18 alkyl or alkenyl group, AO is a group $C_2H_4$ or $C_3H_6$ and r is an integer of 2 to 35,

IC1 and IC2 are preferably selected from one of the following bivalent groups (with "*" indicating the connection sites)

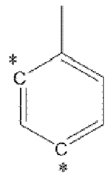, 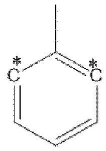, 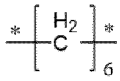, 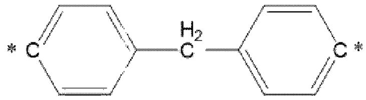

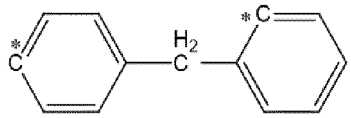, 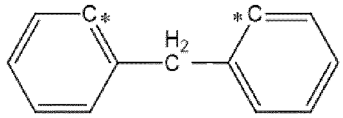,

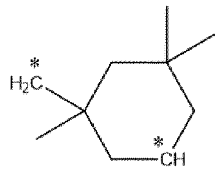, 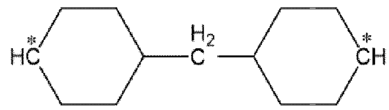,

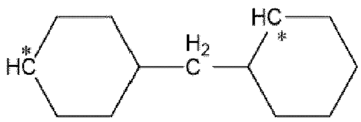, 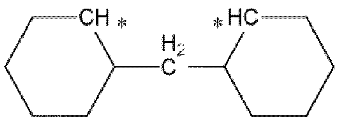

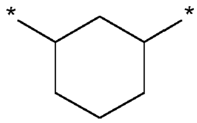, 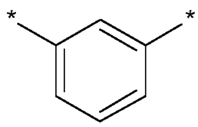

and in which AM is selected from a group $C_2H_4$, $C_3H_6$, $C_4H_8$, $C_5H_{10}$, $C_6H_{12}$, $C_6H_{10}$, $-CH_2-C_6H_4-CH_2-$ or a group

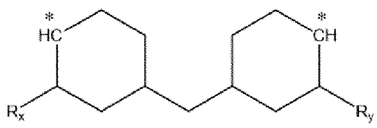

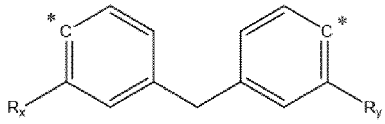

in which $R_x$ and $R_y$ represent H or $CH_3$.

In a very preferred embodiment of (U-2a), IC1 and/or IC2 are selected from

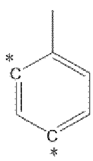, 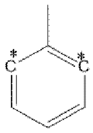, 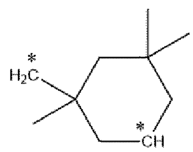

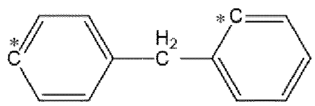, 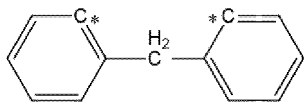

Even more preferably, IC1 and IC2 are selected from

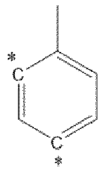
,
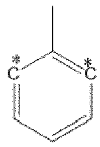

In a very preferred embodiment of (U-2a), AM is selected from $C_2H_4$ and $-CH_2-C_6H_4-CH_2-$ .

In a very preferred embodiment of (U-2a), m is an integer from 0 to 10. In a special embodiment, m is an integer from 1 to 5. In another embodiment, m is 0.

In another preferred embodiment, the urea compound has a structure according to formula (U-2b) in which

the preferred embodiments of IC1 and IC2 are as described for (U-2a), in particular a group $C_7H_6$ or a group $-C_6H_4-CH_2-C_6H_4-$,

AM1 and AM2 are selected from a linear or branched, saturated or unsaturated C1 to C24 alkyl or alkenyl group or a group $C_6H_5-CH_2-$ , and

RP3 is selected from a hydrocarbyl group having 2 to 20 carbon atoms or a polyether segment having 1 to 40 ether oxygen atoms, preferably a polyether segment comprising 1 to 30 ethylene oxide and/or propylene oxide based repeating units.

In a further preferred embodiment, the urea compound has a structure according to formula (U-2c) in which

the preferred embodiments of AM1 and AM2 are as described for (U-2b),

the preferred embodiments of AM are as described for (U-2a), and

IC4 is selected from a group as described for IC1 and IC2 or a urethane group containing segment having the structure

-[IC2-NH-(C=O)-O-RP3-O-(C=O)-NH-IC2]-

in which IC2 is defined as described for (U-2a) and RP3 is defined as described for (U-2b).

For (U-2c), it is particularly preferred that IC4 is selected from a group $C_7H_6$, a group $-C_6H_4-CH_2-C_6H_4-$, and a group

-[IC2-NH-(C=O)-O-RP3-O-(C=O)-NH-IC2]-

in which IC2 represents a group $C_7H_6$ or a group $-C_6H_4-CH_2-C_6H_4-$ and RP3 represents a polyether segment comprising 1 to 30 ethylene oxide and/or propylene oxide based repeating units.

In a preferred embodiment of (U-2c), q is an integer from 0 to 15, even more preferably from 0 to 7 and most preferably from 0 to 4, like from 1 to 4.

In a preferred embodiment, at least 50 wt. % of the urea compounds of the inventive composition have a structure according to formula (U-2a) or (U-2c).

In a very preferred embodiment, at least 50 wt. % of all urea compounds of the inventive composition have a structure according to formula (U-2a) and m is 0 or m is 1 to 5; very preferably, m is 0.

In a preferred embodiment, the urea compound is a urea urethane and 95 - 100% by weight the urea compound contain at least one molecule segment of the general formula (U-3a)

-O-CO-NH-Y1-NH-CO-NH- (U-3a)

where

Y1 represents a saturated or unsaturated, branched or unbranched hydrocarbon radical containing 6 to 20 carbon

atoms, in case of multiple occurrence of Y1, Y1 independently represents a saturated or unsaturated, branched or unbranched hydrocarbon radical containing 6 to 20 carbon atoms

and in each case contains no molecule segment of the general formula (U-3b)

-O-CO-NH-Y2-NH-CO-O- (U-3b)

where

Y2 represents a saturated or unsaturated, branched, or unbranched hydrocarbon radical containing 6 to 20 carbon atoms. In case of multiple occurrence of Y2, Y2 independently represents a saturated or unsaturated, branched or unbranched hydrocarbon radical containing 6 to 20 carbon atoms.

The urea-based compounds may be prepared in a known way by reaction of corresponding isocyanates with amines, e. g., amines or isocyanates as described in claim 14 of WO 2015 158 407. Preparation processes for urea compounds of this kind are described in more detail for example in US 7250487 B2, US 7348397 B2, EP 13 96 510 A1, EP 2 292 675 A1.

The synthesis of the urea compound may suitably take place directly in the presence of the cyclic amide and the solvent. In another embodiment, the urea compound is synthesized in the presence of the solvent and the cyclic amide is added afterwards. In yet another embodiment, the urea compound is synthesized in the presence of the cyclic amide and the solvent is added afterwards. In a further embodiment, the urea compound is synthesized in the presence of the cyclic amide and one solvent, and a second solvent different from the first one is added afterwards.

It is preferred that the urea compound has a number average molecular weight of from 400 g/mol to 30000 g/mol. Preferably, the urea compound has a number average molecular weight (Mn) of at least 400 g/mol, preferably at least 500 g/mol. More preferably, the number average molecular weight is above 600 g/mol, even more preferably above 650 g/mol, and most preferably above 800 g/mol. Furthermore, the number average molecular weight (Mn) of the urea compound is preferably below 20000 g/mol, more preferably below 10000 g/mol, and most preferably below 8000 g/mol. Preferably, the number average molecular weight (Mn) is between 650 g/mol and 20000 g/mol, more preferably between 800 g/mol and 8000 g/mol, even more preferably between 800 g/mol and 5000 g/mol.

In a further preferred embodiment, the number average molecular weight is at least 800 g/mol, preferably 1000 g/mol, preferably at least 1500 g/mol, preferably between 1500 g/mol and 20000 g/mol and more preferred between 1500 g/mol and 8000 g/mol and even more preferred between 1500 and 5000 g/mol.

The number and weight average molecular weight can be determined by gel permeation chromatography (eluent: solution of lithium bromide (content 5 g/l) in dimethylacetamide, standard: polymethylmethacrylate, column temperature: 50°C) according to DIN EN ISO 13885-2 (November 2021). Alternatively, the number average molecular weight may be determined by calculation. Additionally, the number average molecular weight for small molecules up to 1000 g/mol may be determined by other methods such as mass spectroscopy or nuclear magnetic resonance spectroscopy.

The composition according to the invention comprises a solvent, which is different from the cyclic amide comprising at least one amide NH group and wherein the solvent comprises at least one of an amide group and a sulfoxide group, wherein the amide nitrogen of the amide group has two substituents, wherein the substituents are selected from aliphatic and aromatic groups. The amide nitrogen of the amide group has two substituents, this means the amide group cannot be an NH amide group.

The solvent suitably comprises at least one of a N-substituted cyclic amide, non-cyclic dialkyl amide of mono- and difunctional carboxylic acids, N-acyl morpholines, and sulfoxides.

Suitable solvents are for example N-substituted cyclic amides: N-alkyllactams, preferably N-alkyl butyrolactams, N-alkyl valerolactams, and N-alkyl caprolactams, wherein the alkyl groups suitably have 1 to 18 carbon atoms, more preferably 1 to 12 carbon atoms, even more preferably 1 to 8 carbon atoms), as well as hydroxyalkyllactams (e.g., hydroxyethylpyrrolidon). Cyclic amides are amides wherein the amide nitrogen and amide carbonyl carbon are part of the cyclic structure.

Further suitable solvents are non-cyclic dialkyl amides of mono- and difunctional carboxylic acids: N,N-dialkylamides of C1 to C18 monocarboxylic acids, bis(N,N-dialkyl)amides of C1 to C18 dicarboxylic acids; optionally these carboxylic acids comprise hydroxyl, ether or ester groups, such as N,N-dialkylamidoalkylesters, N,N-dialkylamidoalkyl ethers, N,N-dialkyllactamides. Sulfoxides are suitable as well, preferably dimethyl sulfoxide. Non-cyclic amides are amides wherein the amide nitrogen and amide carbonyl carbon are not both part of the cyclic structure. Under this definition e. g. N-formylmorpholine is considered to be a non-cyclic amide.

Further suitable solvents are non-cyclic amides that are available from reaction of diamines and monocarboxylic

acids. Suitable examples are reaction products of C1 to C18 monocarboxylic acids and C2 to C12 alkylene diamines.

Suitable examples of N-alkylbutyrolactams are N-methylbutyrolactam, N-ethylbutyrolactam, N-butylbutyrolactam, N-octylbutyrolactam and N-hydroxyethyl butyrolactam. Suitable examples of N-substituted caprolactams are N-ethyl caprolactam, N-methyl caprolactam, N-butyl caprolactam, N-propyl caprolactam.

Suitable solvents are also linear amides, for example N,N-dimethylformamide, N,N-dimethylacetamide, N,N-dimethylamides of C3 to C18 monocarboxylic acids (preferably N,N-dimethylamides of C6 to C10 monocarboxylic acids), N,N-dialkylamidoalkylesters, N,N-dialkylamidoalkyl ethers, and acylmorpholines.

Preferred examples of these are also N,N-dimethylamidoalkyl ester, N,N-dimethylamidoalkyl ether, N-formylmorpholine and N-acetylmorpholine.

Another suitable solvent is N-acetyl caprolactam.

Preferably, the solvent is liquid at 23° C and 1013 mbar.

The composition according to the invention comprises a cyclic amide comprising at least one amide NH group. A cyclic amide is an amide wherein the amide nitrogen and amide carbonyl carbon are part of the cyclic structure.

The cyclic amide suitably comprises at most 2 amide groups. In another embodiment, the cyclic amide suitably comprises two amide groups and in an even different embodiment the cyclic amide comprises exactly one amide group.

Preferably, the cyclic amide consists of C, H, O and N atoms. That means that the cyclic amide consists of these atoms only, without any other atoms which are not mentioned being present.

Suitably, the cyclic amide is a lactam. Lactams are cyclic amides carrying an amide group. Preferably, the cyclic amide comprises at least one of ε-caprolactam, γ-butyrolactam, δ-valerolactam, and mixtures thereof.

Moreover, cyclic amides are suitable, wherein one or more of the carbon atoms which are a part of the ring carry a substituent, preferably an aliphatic substituent.

It is preferred that the cyclic amide has a molecular weight from 71 to 250 g/mol. It is more preferred that the cyclic amide has a molecular weight from 85 to 220 g/mol. It is even more preferred that the cyclic amide has a molecular weight from 85 to 198 g/mol and it is most preferred that the cyclic amide has a molecular weight from 85 to 145 g/mol, such as from 99 to 130 g/mol or from 99 to 115 g/mol.

The cyclic amide and the solvent are preferably present in the composition in a weight ratio from 0.5:99.5 to 60.0:40.0. More preferably in a weight ratio from 0.7 : 99.3 to 55.0 : 45.0; even more preferred from 1.0 :99.0 to 50.0 : 50.0; and most preferred from 2.0 : 98.0 to 45: 55; in a further embodiment the cyclic amide and the solvent are preferably present in the composition in a weight ratio from 5.0 : 95.0 to 40.0 : 60.0 and more preferably from 10 : 90 to 37.5 : 62.5.

Preferably, the amount of cyclic amide compared to the total weight of cyclic amide and solvent is at least 0.7%, preferably at least 1.0%, more preferably at least 2.0%, even more preferably at least 5.0%, most preferably at least 10.0%, such as at least 20.0% or at least 25.0%. Also preferably, the amount of cyclic amide compared to the total weight of cyclic amide and solvent is at most 55.0%, preferably at most 50.0%, more preferably at most 45.0%, such as at most 40.0% or at most 37.5%.

Generally, the composition is a liquid at 23 °C and 1013 mbar.

The composition suitably comprises from 0.1 to 15.0 weight-% of a salt, calculated on the total weight of the cyclic amide, the at least one solvent, the urea compound, and the salt.

Generally, the composition may comprise one or more salts. The salts according to the present invention are containing cations of elements of the main groups I and II of the Periodic Table of the Elements (alkali and alkaline earth metals) or ammonium ions (incl. substituted ammonium ions, e. g., alkylammonium ions) and mixtures thereof. Preferred salts are such containing lithium, calcium or magnesium, particularly preferably lithium and calcium cations, preferably in chloride, acetate, and/or nitrate form. In some embodiments, the salts contain as anions preferably monovalent anions, particularly preferably halides, pseudohalides, formate, acetate and/or nitrate, most particularly preferably chloride, acetate and/or nitrate.

Particularly preferred as salts are inorganic lithium salts, such as lithium chloride or lithium nitrate, as well as ammonium salts, for example alkyl ammonium salts, in particular quaternary ammonium salts, such as tetra-alkyl ammonium halides.

The composition suitably comprises 0.1 to 15.0 % by weight of the salt, wherein the % by weight are calculated on the weight of the cyclic amide, the solvent, the urea compound, and the salt. Preferably, the composition comprises salt in an amount of 0.1 to 10.0 % by weight, more preferably 0.1 to 8.0 % by weight, even more preferably 0.1 to 5.0 % by weight and most preferably, 0.1 to 3.0 % by weight.

In one preferred embodiment, the composition does not comprise a salt selected from lithium salts and halide salts or comprises such salts in low amounts. Low amounts are salt amounts that do not exceed 1.0% by weight, and it is more preferred that the amount does not exceed 0.5 % by weight, and it is more preferred that the amount does not exceed 0.3 % by weight, preferably not exceed 0.1 % by weight, calculated on the weight of the composition.

In a further preferred embodiment, the composition does not comprise a salt. If the composition does not comprise a salt, it is preferred that the salt content does not exceed 0.50 % by weight, and it is more preferred that is does not exceed 0.30 % by weight, preferably not exceed 0.10 % by weight, for example not exceed 0.05% by weight, calculated

on the weight of the composition.

In some embodiments the composition further comprises a surfactant. Preferably, the salt in the composition may be substituted by surfactants. The surfactants may preferably substitute the salt completely or may be added in addition to salt. In the latter case, the surfactant may substitute the salt partially which leads to a reduced salt content, or the surfactant may be added in addition to the salt and the salt content remains unreduced. Suitable surfactants are anionic surfactants, e. g., sulfosuccinates, alk(en)yl sulfates, alk(en)yl ether sulfates, ester sulfonates, soaps, ether carboxylic acids; nonionic surfactants, e. g., alcohol alkoxylates, alkylglycosides, fatty acid ester alkoxylates, amine oxides, gemini surfactants; cationic surfactants, e. g., tetraalkyl ammonium salts, quaternary ammonium salts, esterquats; amphoteric or zwitterionic surfactants, e. g., betaines, alkylamido betaines, imidazolines.

Especially preferred are quaternary ammonium salts and sulfosuccinates. Suitably, the surfactants are employed in amounts of 0.1 to 15.0 % by weight, preferably 0.2 to 14.0 % by weight, more preferably 0.4 to 13.0 % by weight, even more preferably 0.5 to 12.0 % by weight, most preferably 0.8 to 11.0 % by weight, such as 1.0 to 10.0 % by weight, calculated on the total weight of the composition.

It is preferred that the composition comprises

1 - 60 weight-% of the cyclic amide comprising at least one amide NH group,

5 - 70 weight-% of the solvent, which is different from the cyclic amide comprising at least one amide NH group and wherein the solvent comprises at least one of a di-aliphatic-substituted amide group and a sulfoxide group

5 - 60 weight-% of the urea compound having a number average molecular weight of at least 350 g/mol

calculated on the total weight of the cyclic amide, the solvent, and the urea compound.

In a particularly preferred embodiment, the composition comprises

2 - 55 weight-% of the cyclic amide comprising at least one amide NH group,

10 - 65 weight-% of the solvent, which is different from the cyclic amide comprising at least one amide NH group and wherein the solvent comprises at least one of a di-aliphatic-substituted amide group and a sulfoxide group

10 - 55 weight-% of the urea compound having a number average molecular weight of at least 350 g/mol

calculated on the total weight of the cyclic amide, the solvent, and the urea compound.

In a more preferred embodiment, the composition comprises

5 - 50 weight-% of the cyclic amide comprising at least one amide NH group,

15 - 60 weight-% of the solvent, which is different from the cyclic amide comprising at least one amide NH group and wherein the solvent comprises at least one of a di-aliphatic-substituted amide group and a sulfoxide group

15 - 50 weight-% of the urea compound having a number average molecular weight of at least 350 g/mol

calculated on the total weight of the cyclic amide, the solvent, and the urea compound.

In an even more preferred embodiment, the composition comprises

10 - 45 weight-% of the cyclic amide comprising at least one amide NH group,

20 - 55 weight-% of the solvent, which is different from the cyclic amide comprising at least one amide NH group and wherein the solvent comprises at least one of a di-aliphatic-substituted amide group and a sulfoxide group

16 - 45 weight-% of the urea compound having a number average molecular weight of at least 350 g/mol

calculated on the total weight of the cyclic amide, the solvent, and the urea compound.

In a further preferred embodiment, the composition comprises

10 - 45 weight-% of the cyclic amide comprising at least one amide NH group,

25 - 50 weight-% of the solvent, which is different from the cyclic amide comprising at least one amide NH group and wherein the solvent comprises at least one of a di-aliphatic-substituted amide group and a sulfoxide group

17 - 40 weight-% of the urea compound having a number average molecular weight of at least 350 g/mol

calculated on the total weight of the cyclic amide, the solvent, and the urea compound.

In a very preferred embodiment, the composition comprises

15 - 40 weight-% of the cyclic amide comprising at least one amide NH group,

25 - 50 weight-% of the solvent, which is different from the cyclic amide comprising at least one amide NH group and wherein the solvent comprises at least one of a di-aliphatic-substituted amide group and a sulfoxide group

18 - 38 weight-% of the urea compound having a number average molecular weight of at least 350 g/mol

calculated on the total weight of the cyclic amide, the solvent, and the urea compound.

In another preferred embodiment, the composition comprises

15 - 25 weight-% of the cyclic amide comprising at least one amide NH group,

25 - 50 weight-% of the solvent, which is different from the cyclic amide comprising at least one amide NH group and wherein the solvent comprises at least one of a di-aliphatic-substituted amide group and a sulfoxide group

19 - 35 weight-% of the urea compound having a number average molecular weight of at least 350 g/mol

calculated on the total weight of the cyclic amide, the solvent, and the urea compound.

In yet another preferred embodiment, the composition comprises

15 - 20 weight-% of the cyclic amide comprising at least one amide NH group,

30 - 50 weight-% of the solvent, which is different from the cyclic amide comprising at least one amide NH group and wherein the solvent comprises at least one of a di-aliphatic-substituted amide group and a sulfoxide group

20 - 33 weight-% of the urea compound having a number average molecular weight of at least 350 g/mol

calculated on the total weight of the cyclic amide, the solvent, and the urea compound.

In a special embodiment, the composition comprises at least two solvents different from each other, with the proviso that one of the solvents is dimethyl sulfoxide (DMSO) and the second solvent is a solvent comprising at least one of a di-aliphatic-substituted amide group. It is preferred that the weight amount of DMSO compared to the total weight of DMSO, the second solvent comprising at least one of a di-aliphatic-substituted amide group, and the cyclic amide comprising at least one amide NH group is at least 1%, preferably at least 2%, more preferably at least 5%, even more preferably at least 7%, most preferably at least 10%. It is also preferred that the weight amount of DMSO compared to the total weight of DMSO, the second solvent comprising at least one of a di-aliphatic-substituted amide group, and the cyclic amide comprising at least one amide NH group is at most 60%, preferably at most 50%, more preferably at most 45%, even more preferably at most 40%, most preferably at most 35%, such as at most 30%.

Additionally, the invention deals with the use of the composition for controlling the rheology of a liquid composition. The term "liquid composition" according to the present invention denotes a composition, being liquid at 23 °C and 1013mbar.

The composition of the present invention may be employed to control the rheology of various kinds of liquid compositions. Therefore, in one embodiment, the liquid composition may be an aqueous composition. The primary or even the only liquid diluting agent of a liquid aqueous composition is water. Additionally, the aqueous composition may comprise certain amounts of organic diluents. The organic diluents are the same or different from the at least one solvent, which is

different from the cyclic amide comprising at least one amide NH group and wherein the solvent comprises at least one of an amide group and a sulfoxide group, wherein the amide nitrogen of the amide group has two substituents, wherein the substituents are selected from aliphatic and aromatic groups. It is preferred that a liquid aqueous composition comprises less than 35% by weight, preferably less than 25% by weight, more preferably less than 20% by weight and most preferably less than 10% or even less than 5% by weight of organic diluents, calculated on the total weight of the liquid composition. In a special embodiment, the liquid aqueous composition does not contain organic diluents at all.

In general, a liquid aqueous composition comprises at least 10%, preferably at least 15%, more preferably at least 20% by weight of water. In certain cases, a liquid aqueous composition can comprise at least 25%, more preferably at least 30% by weight of water. In general, a liquid aqueous composition comprises at most 90% by weight of water, such as up to 80% or up to 70% by weight. In special embodiments, the liquid aqueous composition comprises up to 95%, or even up to 97, 98, or 99% by weight of water.

In another embodiment, the liquid composition may be a non-aqueous composition. A non-aqueous composition is essentially free from water. That denotes a liquid composition suitably comprising between 0.0 and less than 10.0 % by weight of water, preferably between 0.0 and 7.0 % by weight of water, calculated on the total weight of the liquid composition. More preferably, the non-aqueous liquid composition comprises less than 5.0 % by weight of water. For example, the liquid composition comprises less than 3.0 % by weight or less than 1.0% by weight of water, calculated on the total weight of the liquid composition.

Suitably, the liquid composition is selected from a coating composition, a clear coat composition, a lacquer, a varnish, a plastic formulation, a pigment paste, an effect pigment paste, a polymer formulation, a sealant formulation, a cosmetic formulation, a homecare or industrial care formulation (including perfume and fragrance formulations), a ceramic formulation, an adhesive formulation, a liquid formulation for use in gas and oil production, a composition for the manufacture of electrical components and circuits, a liquid formulation for use in energy storage media, a cleaning agent, a potting compound, a building material formulation, a lubricant, a filling compound, a wax emulsion, a metalworking fluid, a metal-processing product, a liquid composition in the form of a spraying agent, a so-called deposition aid (e.g., for use in plant protection agents or for the general purpose of drift reduction), a ink, a printing ink and a ink jet ink or a composition that may be used as corrosion protection in the field of marine and protective coatings and mixtures thereof.

Further liquid compositions wherein the composition according to the present invention can be used are solvent-based or solvent-free paints, printing inks and inks and lacquers as e. g., lacquers for varnishing of plastics, wire enamels, floor coatings, coating compositions for coating foodstuffs and seeds, and as so-called color resists, which are used for color filters, for example in flat panel displays such as liquid-crystal displays. The field of application lacquers also includes pasty materials which generally have a very high proportion of solids and a small proportion of liquid components, for example so-called pigment pastes or also pastes based on effect pigments, for example metal effect pigments such as, for example, aluminum pigments, silver pigments, brass pigments, zinc pigments, copper pigments, bronze pigments such as gold bronzes, fire-dyed bronzes or iron oxide aluminum pigments. The effect pigments also include, for example, interference pigments or pearlescent pigments such as, for example, metal oxide mica pigments, fish silver, bismuth oxide chloride or basic lead carbonate.

The plastic formulations can be liquid or non-liquid starting materials to produce plastic materials, which are preferably converted into a duromer by a chemical cross-linking process ("curing"). Preferred plastic preparations are unsaturated polyester resins, vinyl ester resins, acrylate resins, epoxy resins, polyurethane resins, formaldehyde resins (such as melamine-formaldehyde or urea-formaldehyde). These can be cured under very different conditions, e.g. at room temperature (cold-curing systems) or at elevated temperature (hot-curing systems), optionally with application of pressure ("closed mold" application, sheet molding compound or bulk molding compound). The plastic formulations also include PVC plastisols.

The cosmetic preparations can be various liquid compositions, which are used in the so-called personal care or healthcare sector, e.g., lotions, creams, pastes such as, for example, toothpaste, foams such as, for example, shaving foam, gels such as, for example, shaving gels, shower gels or active ingredients in gel formulations, hair shampoos, liquid soaps, nail varnishes, lipsticks and hair dyes.

The so-called wax emulsions are preferably dispersions of solid waxes in particulate form at room temperature in water or an organic medium.

The building material formulations may be liquid or paste-like materials, which are used in the construction sector and solidify after curing. Examples are hydraulic binders such as concrete, cement, mortar, tile glue and plaster.

The metal working fluids may be cutting liquids, drilling fluids (such as are used in metal processing), or forging fluids or lubricants in general. Potential other areas are release agents (often in the form of aqueous emulsions, for example, aluminum die casting and foundry applications), foundry washes (foundry coatings) and liquids for the surface treatment of metals (for example "surface finishing", surface treatment and plating).

The lubricants are means, which are used for lubrication, that is to say, which serve to reduce friction and wear, as well as to provide power, cooling, vibration dampening, sealing action and corrosion protection; liquid lubricants being preferred here.

Cleaning agents can be used to clean a wide range of objects, for example in the area of homecare or industrial care. They effect or assist the removal of impurities, residues and attachments. The cleaners also include detergents (primarily for cleaning textiles, their precursors, leather, and dish), and personal care products. Formulations containing perfumes and other fragrances (either as liquid raw materials or in encapsulated form), e.g., as perfume gels, also belong to this area of application.

Liquid formulations used for gas and oil production are formulations used to develop and exploit a deposit. Drilling fluids or "drilling muds" are preferred examples. Another application example are liquids used to prepare or perform a hydraulic fracturing process and liquids that support the production process of gas and oil.

The adhesives can be all adhesive materials which are liquid under processing conditions, and which can join parts by surface adhesion and internal strength.

The liquid compositions of the invention may further comprise customary additives. Examples of additives are antiblocking agents, stabilizers, antioxidants, pigments, wetting agents, dispersants, emulsifiers, additional rheology additives, UV absorbers, free-radical scavengers, slip additives, defoamers, adhesion promoters, leveling agents, waxes, nanoparticles, film-forming auxiliaries, and flame retardants. Preferred additives are wetting agents, dispersants and/or emulsifiers and rheology additive which are different from the composition of the present invention, such as clay-based thickeners (including organoclays), (poly)amides, polysaccharides (like cellulose derivatives, guar, xanthan), polyacrylates, or associative thickeners. In an example, the inventive composition can be used in combination with other thickeners affecting the low, medium, and/or high shear performance of the liquid composition that needs to be modified concerning its rheological behavior.

In a further embodiment, the invention also relates to a process for controlling the rheology of a liquid composition comprising the steps of providing the composition according to the present invention, providing a liquid composition and mixing the composition according to the present invention and the liquid composition. Suitable liquid compositions are the liquid compositions as aforementioned amongst others. The step of mixing the components may be executed according to current processes known by the person skilled in the art. This may involve mixing by manual or electrical means inter alia. Mixing is combining the compositions and exerting shear force on the combined compositions.

The invention further deals with a liquid composition comprising the composition according to the invention and a binder. Suitably binders comprise at least one of alkyd resins (such as short, medium, or long oil alkyd), unsaturated polyester resins, vinylester resins, acrylate resins, epoxy resins, polyurethane resins, polyaspartic resins, phenolic binders, silicones, chlorinated rubbers, vinyl based binders, poly(vinyl alcohol), poly(vinyl acetates), saturated polyester binders, polyacrylates and acrylate copolymers, urea and melamine resins, silicate binders, cellulose based binders, and silyl modified polymers. Preferred binders comprise at least one of alkyd resins (such as short, medium, or long oil alkyd), unsaturated polyester resins, vinylester resins, acrylate resins, epoxy resins, polyurethane resins, polyacrylates and acrylate copolymers, polyaspartic resins, and silyl modified polymers.

These binders can preferably be solvent-borne, solvent-free, or aqueous binders. Solvent-borne and aqueous binders can be delivered both as solutions, emulsions, or dispersions. Therefore, the above-mentioned binders also comprise aqueous binder systems like styrene-acrylic dispersions, urethane-acrylic dispersions, and alkyd emulsions. The binders also comprise non-aqueous dispersion (NAD) systems.

Another object of the invention is an article, wherein at least a part of the surface of the article is coated with the liquid composition. In a different embodiment, the coated article is obtainable by the steps of providing an article, providing the liquid composition according to the present invention and coating at least a part of the surface of the article with the liquid composition.

Furthermore, in an even different embodiment the invention relates to a coated article, wherein at least a part of the surface of the article is coated with the liquid composition according to the present invention and wherein the liquid composition is hardened. In another embodiment, the coated article is obtainable by the steps of providing an article, providing the liquid composition according to the present invention, coating at least a part of the surface of the article with the liquid composition and hardening the liquid composition.

Suitable articles are all three-dimensional objects, irrespective of their size and volume and whether they are mobile or immobile. Illustrative, but not limiting examples are building interiors and exteriors, flooring, furniture, vehicles used for transportation (like automobiles, bikes, boats, aircrafts, agricultural machines, and all kinds of freight vehicles), bridges and tunnels, machinery and production equipment, electrical devices, cans, metal coils, wires, containers, household articles and hardware, pulp and paper, as well as all kind of articles made of wood, metal, plastics or glass (e.g., for functional or ornamental use). The meaning of the wording "coating" is well-known to the person skilled in the art. In this context, it relates to the application of the liquid composition on the surface or other areas of said article to cover it at least partly or even encasing the article in its entirety. In this case, the liquid composition toughens or hardens after it has been applied to said article. Hardening means converting the liquid composition into a solid state. This can be achieved by evaporation of liquid diluents (physical drying) or by chemical crosslinking reaction (curing), and by combinations thereof.

The invention is illustrated further below giving reference to examples. The choice of the respective reaction conditions, as e. g., the reaction temperature, reaction time and dosing rates are known to the skilled person and are

illustrated in more detail in the working examples.

**Experimental part**

**Inventive Examples**

Preparation of intermediates

Table 1: Explanation of Abbreviations

| Product name | Chemical Composition |
|---|---|
| TDI T80 | 80/20 mixture of 2,4-toluylene diisocyanate and 2,6-toluylene diisocyanate |
| TDI T65 | 65/35 mixture of 2,4-toluylene diisocyanate and 2,6-toluylene diisocyanate |
| ε-caprolactam | 2-azacycloheptanone |
| DMSO | Dimethylsulfoxide |

Manufacture of Intermediates I1 to I6:

Table 2: Intermediates

| Intermediate | Mono alcohol | Diisocyanate |
|---|---|---|
| I1 | butyltriglycol | TDI T65 |
| I2 | polyethylene glycol monomethyl ether (hydroxyl value: 125 mg KOH/g) | TDI T80 |
| I3 | (Z)-Octadec-9-enol | TDI T65 |
| I4 | polyethylene glycol monobutyl ether (hydroxyl value: 148 mg KOH/g) | TDI T65 |
| I5 | polyethylene glycol monobutyl ether (hydroxyl value: 183 mg KOH/g) | TDI T65 |
| I6 | butyltriglycol | TDI T80 |

The hydroxyl value was determined by acetylation of the free hydroxyl groups of the substance with acetic anhydride in pyridine solvent. After completion of the reaction, water was added, and the remaining unreacted acetic anhydride was converted to acetic acid and measured by titration with potassium hydroxide.

Procedure for intermediates I1 to I6:

2 mol of TDI T65 or TDI T80 respectively and 200 ppm benzoyl chloride were weighed into a glass flask equipped with stirrer, reflux condenser and nitrogen inlet and heated to 40 °C. Subsequently, 1 mol of the mono alcohol (according to the above table 2) was added dropwise to the reaction mixture over a period of 30 min. The reaction mixture was stirred for additional 5 hours at 60 °C. A clear, light yellow, liquid intermediate containing excessive diisocyanate is obtained. The excessive diisocyanate contained in the intermediates was removed by distillation, whereby intermediates I1 to I6 were obtained.

**Comparative Examples (not inventive)**

**C1:**

In a four-neck flask with stirrer, 75.0 g of N-butylbutyrolactam was heated up to 80 °C under nitrogen atmosphere under stirring. 3.61 g m-xylylenediamine (26.5 mmol) were added and the mixture was homogenized. 21.4 g of the intermediate I1 (53.0 mmol) were added dropwise under stirring within 30 min in such a way that the temperature did not exceed 85 °C. Afterwards the mixture was stirred for 3 hours at 80 °C. The result is a transparent, yellowish product.

**C2:**

In a four-neck flask with stirrer, 1.06 g of lithium chloride were added to 73.9 g of N-butylbutyrolactam under stirring. The mixture was heated up to 80 °C under nitrogen atmosphere. The lithium chloride was dissolved within 30 min under stirring. 3.61 g m-xylylenediamine (26.5 mmol) were added and the mixture was homogenized. 21.4 g of the intermediate I1 (53.0 mmol) were added dropwise under stirring within 30 min in such a way that the temperature did not exceed 85 °C. Afterwards the mixture was stirred for 3 hours at 80 °C. The result is a transparent, yellowish product.

**C3:**

In a four-neck flask with stirrer, 70.0 g of N-butylbutyrolactam was heated up to 80 °C under nitrogen atmosphere under stirring. 4.33 g m-xylylenediamine (31.8 mmol) were added and the mixture was homogenized. 25.7 g of the intermediate I1 (63.6 mmol) were added dropwise under stirring within 30 min in such a way that the temperature did not exceed 85 °C. Afterwards the mixture was stirred for 3 hours at 80 °C. The result is a transparent, yellowish product.

**C4:**

In a four-neck flask with stirrer, 1.27 g of lithium chloride were added to 68.7 g of N-butylbutyrolactam under stirring. The mixture was heated up to 80 °C under nitrogen atmosphere. The lithium chloride was dissolved within 30 min under stirring. 4.33 g m-xylylenediamine (31.8 mmol) were added and the mixture was homogenized. 25.7 g of the intermediate I1 (63.6 mmol) were added dropwise under stirring within 30 min in such a way that the temperature did not exceed 85 °C. Afterwards the mixture was stirred for 3 hours at 80 °C. The result is a transparent, yellowish product.

**C5:**

In a four-neck flask with stirrer, 70.0 g of N-butylbutyrolactam was heated up to 80 °C under nitrogen atmosphere. Under stirring, 3.20 g m-xylylenediamine (23.5 mmol) were added and the mixture was homogenized. 26.8 g of the intermediate I4 (47.0 mmol) were added dropwise under stirring within 30 min in such a way that the temperature did not exceed 85 °C. Afterwards the mixture was stirred for 3 hours at 80 °C. The result is a transparent, yellowish product.

**C6:**

In a four-neck flask with stirrer, 75.0 g of N-butylbutyrolactam was heated up to 80 °C under nitrogen atmosphere. Under stirring, 4.21 g m-xylylenediamine (30.9 mmol) were added and the mixture was homogenized. 30.8 g of the intermediate I5 (61.8 mmol) were added dropwise under stirring within 30 min in such a way that the temperature did not exceed 85 °C. Afterwards the mixture was stirred for 3 hours at 80 °C. The result is a transparent, yellowish product.

**C7:**

In a four-neck flask with stirrer, 1.25 g of lithium chloride were added to 63.8 g of N-butylbutyrolactam under stirring. The mixture was heated up to 80 °C under nitrogen atmosphere. The lithium chloride was dissolved within 30 min under stirring. Under stirring, 4.21 g m-xylylenediamine (30.9 mmol) were added and the mixture was homogenized. 30.8 g of the intermediate **I5** (61.8 mmol) were added dropwise under stirring within 30 min in such a way that the temperature did not exceed 85 °C. Afterwards the mixture was stirred for 3 hours at 80 °C. The result is a transparent, yellowish product.

**C8:**

In a four-neck flask with stirrer, 65.0 g of N-butylbutyrolactam was heated up to 80 °C under nitrogen atmosphere under stirring. 3.92 g m-xylylenediamine (28.8 mmol) were added and the mixture was homogenized. A mixture of 7.47 g of the intermediate I1 (18.5 mmol) and 23.6 g of the intermediate I2 (38.8 mmol) was added dropwise under stirring within 30 min in such a way that the temperature did not exceed 85 °C. Afterwards the mixture was stirred for 3 hours at 80 °C. The result is a transparent, yellowish product.

**C9:**

In a four-neck flask with stirrer, 1.00 g of lithium chloride were added to 64.0 g of N-butylbutyrolactam under stirring. The mixture was heated up to 80 °C under nitrogen atmosphere. The lithium chloride was dissolved within 30 min under stirring. 3.92 g m-xylylenediamine (28.8 mmol) were added and the mixture was homogenized. A mixture of 7.47 g of

the intermediate I1 (18.5 mmol) and 23.6 g of the intermediate I2 (38.8 mmol) was added dropwise under stirring within 30 min in such a way that the temperature did not exceed 85 °C. Afterwards the mixture was stirred for 3 hours at 80 °C. The result is a transparent, yellowish product.

**C10:**

In a four-neck flask with stirrer, 65.0 g of N-butylbutyrolactam was heated up to 80 °C under nitrogen atmosphere. Under stirring, 3.92 g m-xylylenediamine (28.8 mmol) were added and the mixture was homogenized. A mixture of 7.47 g of the intermediate I6 (18.5 mmol) and 23.6 g of the intermediate I2 (38.8 mmol) was added dropwise under stirring within 30 min in such a way that the temperature did not exceed 85 °C. Afterwards the mixture was stirred for 3 hours at 80 °C. The result is a transparent, yellowish product.

**C11:**

In a four-neck flask with stirrer, 60.0 g of N-butylbutyrolactam was heated up to 80 °C under nitrogen atmosphere. Under stirring, 4.48 g m-xylylenediamine (32.9 mmol) were added and the mixture was homogenized. A mixture of 8.54 g of the intermediate I6 (21.4 mmol) and 27.0 g of the intermediate I2 (44.4 mmol) was added dropwise under stirring within 30 min in such a way that the temperature did not exceed 85 °C. Afterwards the mixture was stirred for 3 hours at 80 °C. The result is a transparent, yellowish product.

**C12:**

In a glass flask with stirrer, reflux condenser and nitrogen inlet, 85.0 g of N-butylbutyrolactam were heated to 60 °C while stirring. Subsequently, 1.17 g of 1,3-diaminopropane (15.8 mmol) were added and briefly homogenized. A uniform mixture of 13.7 g of intermediate **I3** (30.0 mmol) and 0.126 g of hexamethylene diisocyanate (0.751 mmol) was added dropwise to the reaction mixture over a period of 25 min. The reaction mixture was stirred for additional 3 hours at 80 °C. A clear, yellow, liquid product was obtained.

**C13:**

In a glass flask with stirrer, reflux condenser and nitrogen inlet, 1.36 g of lithium chloride were dissolved in 83.6 g N-butylbutyrolactam while stirring over a period of 30 min at 60 °C, whereby a clear solution was obtained. Subsequently, 1.17 g of 1,3-diaminopropane (15.8 mmol) were added and briefly homogenized. A uniform mixture of 13.7 g of intermediate I3 (30.0 mmol) and 0.126 g of hexamethylene diisocyanate (0.751 mmol) was added dropwise to the reaction mixture over a period of 25 min. The reaction mixture was stirred for additional 3 hours at 80 °C. A clear, yellow, liquid product was obtained.

**C14:**

In a four-neck flask with stirrer, 1.25 g of lithium chloride were added to 53.8 g of N-butylbutyrolactam under stirring. The mixture was heated up to 80 °C under nitrogen atmosphere. The lithium chloride was dissolved within 30 min under stirring. 6.49 g m-xylylenediamine (47.7 mmol) were added and the mixture was homogenized. 38.5 g of the intermediate I1 (95.4 mmol) were added dropwise under stirring within 30 min in such a way that the temperature did not exceed 85 °C. Afterwards the mixture was stirred for 3 hours at 80 °C. The result is a transparent, yellowish product.

**C15:**

In a four-neck flask with stirrer, 75.0 g of N-methylcaprolactam was heated up to 80 °C under nitrogen atmosphere under stirring. 3.61 g m-xylylenediamine (26.5 mmol) were added and the mixture was homogenized. 21.4 g of the intermediate I1 (53.0 mmol) were added dropwise under stirring within 30 min in such a way that the temperature did not exceed 85 °C. Afterwards the mixture was stirred for 3 hours at 80 °C. The result is a transparent, yellowish product.

**C16:**

In a four-neck flask with stirrer, 70.0 g of N-methylcaprolactam was heated up to 80 °C under nitrogen atmosphere under stirring4.33 g m-xylylenediamine (31.8 mmol) were added and the mixture was homogenized. 25.7 g of the intermediate I1 (63.6 mmol) were added dropwise under stirring within 30 min in such a way that the temperature did not exceed 85 °C. Afterwards the mixture was stirred for 3 hours at 80 °C. The result is a transparent, yellowish product.

**C17:**

In a four-neck flask with stirrer, 75.0 g of N-ethylcaprolactam was heated up to 80 °C under nitrogen atmosphere under stirring. 3.61 g m-xylylenediamine (26.5 mmol) were added and the mixture was homogenized. 21.4 g of the intermediate I1 (53.0 mmol) were added dropwise under stirring within 30 min in such a way that the temperature did not exceed 85 °C. Afterwards the mixture was stirred for 3 hours at 80 °C. The result is a transparent, yellowish product.

**C18:**

In a four-neck flask with stirrer, 70.0 g of N-ethylcaprolactam was heated up to 80 °C under nitrogen atmosphere under stirring. 4.33 g m-xylylenediamine (31.8 mmol) were added and the mixture was homogenized. 25.7 g of the intermediate I1 (63.6 mmol) were added dropwise under stirring within 30 min in such a way that the temperature did not exceed 85 °C. Afterwards the mixture was stirred for 3 hours at 80 °C. The result is a transparent, yellowish product.

**C19:**

In a four-neck flask with stirrer, 75.0 g of N-cyclohexylpyrrolidone was heated up to 80 °C under nitrogen atmosphere under stirring. 3.61 g m-xylylenediamine (26.5 mmol) were added and the mixture was homogenized. 21.4 g of the intermediate 11 (53.0 mmol) were added dropwise under stirring within 30 min in such a way that the temperature did not exceed 85 °C. Afterwards the mixture was stirred for 3 hours at 80 °C. The result is a transparent, yellowish product.

**C20:**

In a four-neck flask with stirrer, 70.0 g of N-cyclohexylpyrrolidone was heated up to 80 °C under nitrogen atmosphere under stirring. 4.33 g m-xylylenediamine (31.8 mmol) were added and the mixture was homogenized. 25.7 g of the intermediate I1 (63.6 mmol) were added dropwise under stirring within 30 min in such a way that the temperature did not exceed 85 °C. Afterwards the mixture was stirred for 3 hours at 80 °C. The result is a transparent, yellowish product.

**Inventive Examples**

**E1:**

In a four-neck flask with stirrer, 30.0 g ε-caprolactam were added to 45.0 g of N-butylbutyrolactam under stirring. The mixture was heated up to 80 °C under nitrogen atmosphere. The ε-caprolactam was dissolved within 30 min under stirring. 3.61 g m-xylylenediamine (26.5 mmol) were added and the mixture was homogenized. 21.4 g of the intermediate I1 (53.0 mmol) were added dropwise under stirring within 30 min in such a way that the temperature did not exceed 85 °C. Afterwards the mixture was stirred for 3 hours at 80 °C. The result is a transparent, yellowish product.

**E2:**

In a four-neck flask with stirrer, 28.0 g ε-caprolactam were added to 21.0 g of N-butylbutyrolactam and 21.0 g of DMSO under stirring. The mixture was heated up to 80 °C under nitrogen atmosphere. The ε-caprolactam was dissolved within 30 min under stirring. 4.33 g m-xylylenediamine (31.8 mmol) were added and the mixture was homogenized. 25.7 g of the intermediate I1 (63.6 mmol) were added dropwise under stirring within 30 min in such a way that the temperature did not exceed 85 °C. Afterwards the mixture was stirred for 3 hours at 80 °C. The result is a transparent, yellowish product.

**E3:**

In a four-neck flask with stirrer, 28.0 g ε-caprolactam were added to 28.0 g of N-butylbutyrolactam and 14 g of DMSO under stirring. The mixture was heated up to 80 °C under nitrogen atmosphere. The ε-caprolactam was dissolved within 30 min under stirring. 4.33 g m-xylylenediamine (31.8 mmol) were added and the mixture was homogenized. 25.7 g of the intermediate I1 (63.6 mmol) were added dropwise under stirring within 30 min in such a way that the temperature did not exceed 85 °C. Afterwards the mixture was stirred for 3 hours at 80 °C. The result is a transparent, yellowish product.

**E4:**

In a four-neck flask with stirrer, 28.0 g ε-caprolactam were added to 42.0 g of N-butylbutyrolactam under stirring. The mixture was heated up to 80 °C under nitrogen atmosphere. The ε-caprolactam was dissolved within 30 min under

stirring. 3.20 g m-xylylenediamine (23.5 mmol) were added and the mixture was homogenized. 26.8 g of the intermediate I4 (47.0 mmol) were added dropwise under stirring within 30 min in such a way that the temperature did not exceed 85 °C. Afterwards the mixture was stirred for 3 hours at 80 °C. The result is a transparent, yellowish product.

**E5:**

In a four-neck flask with stirrer, 28.0 g ε-caprolactam were added to 28.0 g of N-butylbutyrolactam and 14.0 g of DMSO under stirring. The mixture was heated up to 80 °C under nitrogen atmosphere. The ε-caprolactam was dissolved within 30 min under stirring. 3.20 g m-xylylenediamine (23.5 mmol) were added and the mixture was homogenized. 26.8 g of the intermediate I4 (47.0 mmol) were added dropwise under stirring within 30 min in such a way that the temperature did not exceed 85 °C. Afterwards the mixture was stirred for 3 hours at 80 °C. The result is a transparent, yellowish product.

**E6:**

In a four-neck flask with stirrer, 26.0 g ε-caprolactam were added to 39.0 g of N-butylbutyrolactam under stirring. The mixture was heated up to 80 °C under nitrogen atmosphere. The ε-caprolactam ε-caprolactam was dissolved within 30 min under stirring. 4.21 g m-xylylenediamine (30.9 mmol) were added and the mixture was homogenized. 30.8 g of the intermediate I5 (61.8 mmol) were added dropwise under stirring within 30 min in such a way that the temperature did not exceed 85 °C. Afterwards the mixture was stirred for 3 hours at 80 °C. The result is a transparent, yellowish product.

**E7:**

In a four-neck flask with stirrer, 26.0 g ε-caprolactam were added to 39.0 g of N-butylbutyrolactam under stirring. The mixture was heated up to 80 °C under nitrogen atmosphere. The ε-caprolactam was dissolved within 30 min under stirring. 3.92 g m-xylylenediamine (28.8 mmol) were added and the mixture was homogenized. A mixture of 7.47 g of the intermediate I1 (18.5 mmol) and 23.6 g of the intermediate I2 (38.8 mmol) was added dropwise under stirring within 30 min in such a way that the temperature did not exceed 85 °C. Afterwards the mixture was stirred for 3 hours at 80 °C. The result is a transparent, yellowish product.

**E8:**

In a four-neck flask with stirrer, 26.0 g ε-caprolactam were added to 39.0 g of N-butylbutyrolactam under stirring. The mixture was heated up to 80 °C under nitrogen atmosphere. The ε-caprolactam was dissolved within 30 min under stirring. 3.92 g m-xylylenediamine (28.8 mmol) were added and the mixture was homogenized. A mixture of 7.47 g of the intermediate I6 (18.5 mmol) and 23.6 g of the intermediate I2 (38.8 mmol) was added dropwise under stirring within 30 min in such a way that the temperature did not exceed 85 °C. Afterwards the mixture was stirred for 3 hours at 80 °C. The result is a transparent, yellowish product.

**E9:**

In a four-neck flask with stirrer, 24.0 g ε-caprolactam were added to 36.0 g of N-butylbutyrolactam under stirring. The mixture was heated up to 80 °C under nitrogen atmosphere. The ε-caprolactam was dissolved within 30 min under stirring. 4.48 g m-xylylenediamine (32.9 mmol) were added and the mixture was homogenized. A mixture of 8.54 g of the intermediate I6 (21.4 mmol) and 27.0 g of the intermediate I2 (44.4 mmol) was added dropwise under stirring within 30 min in such a way that the temperature did not exceed 85 °C. Afterwards the mixture was stirred for 3 hours at 80 °C. The result is a transparent, yellowish product.

**E10:**

In a glass flask with stirrer, reflux condenser and nitrogen inlet, 34.0 g ε-caprolactam was dissolved in 51.0 g N-butylbutyrolactam while stirring over a period of 30 min at 60 °C, whereby a clear solution was obtained. Subsequently, 1.17 g of 1,3-diaminopropane (15.8 mmol) were added and briefly homogenized. A uniform mixture of 13.7 g of intermediate I3 (30.0 mmol) and 0.126 g of hexamethylene diisocyanate (0.751 mmol) was added dropwise to the reaction mixture over a period of 25 min. The reaction mixture was stirred for additional 3 hours at 80 °C. A clear, yellow, liquid product was obtained.

**E11:**

In a four-neck flask with stirrer 21.5 g ε-caprolactam and 1.25 g LiCl were added to 32.3 g of N-butylbutyrolactam under stirring. The mixture was heated to 80 °C under nitrogen atmosphere. The ε-caprolactam and the LiCl were dissolved within 30 min under stirring. 6.49 g m-xylylenediamine (47.7 mmol) were added and the mixture was homogenized. 38.5 g of the intermediate I1 (95.4 mmol) were added dropwise under stirring within 30 min in such a way that the temperature did not exceed 85 °C. Afterwards the mixture was stirred for 3 hours at 80 °C. The result is a transparent, yellowish product.

**E12:**

In a four-neck flask with stirrer, 26.3 g ε-caprolactam were added to 48.8 g of N-methylcaprolactam under stirring. The mixture was heated up to 80 °C under nitrogen atmosphere. The ε-caprolactam was dissolved within 30 min under stirring. 3.61 g m-xylylenediamine (26.5 mmol) were added and the mixture was homogenized. 21.4 g of the intermediate I1 (53.0 mmol) were added dropwise under stirring within 30 min in such a way that the temperature did not exceed 85 °C. Afterwards the mixture was stirred for 3 hours at 80 °C. The result is a transparent, yellowish product.

**E13:**

In a four-neck flask with stirrer, 24.5 g ε-caprolactam were added to 45.5 g of N-methylcaprolactam under stirring. The mixture was heated up to 80 °C under nitrogen atmosphere. The ε-caprolactam was dissolved within 30 min under stirring. 4.33 g m-xylylenediamine (31.8 mmol) were added and the mixture was homogenized. 25.7 g of the intermediate I1 (63.6 mmol) were added dropwise under stirring within 30 min in such a way that the temperature did not exceed 85 °C. Afterwards the mixture was stirred for 3 hours at 80 °C. The result is a transparent, yellowish product.

**E14:**

In a four-neck flask with stirrer, 26.3 g ε-caprolactam were added to 48.8 g of N-ethylcaprolactam under stirring. The mixture was heated up to 80 °C under nitrogen atmosphere. The ε-caprolactam was dissolved within 30 min under stirring. 3.61 g m-xylylenediamine (26.5 mmol) were added and the mixture was homogenized. 21.4 g of the intermediate I1 (53.0 mmol) were added dropwise under stirring within 30 min in such a way that the temperature did not exceed 85 °C. Afterwards the mixture was stirred for 3 hours at 80 °C. The result is a transparent, yellowish product.

**E15:**

In a four-neck flask with stirrer, 24.5 g ε-caprolactam were added to 45.5 g of N-ethylcaprolactam under stirring. The mixture was heated up to 80 °C under nitrogen atmosphere. The ε-caprolactam was dissolved within 30 min under stirring. 4.33 g m-xylylenediamine (31.8 mmol) were added and the mixture was homogenized. 25.7 g of the intermediate I1 (63.6 mmol) were added dropwise under stirring within 30 min in such a way that the temperature did not exceed 85 °C. Afterwards the mixture was stirred for 3 hours at 80 °C. The result is a transparent, yellowish product.

**E16:**

In a four-neck flask with stirrer, 22.5 g ε-caprolactam were added to 52.5 g of N-cyclohexylpyrrolidone under stirring. The mixture was heated up to 80 °C under nitrogen atmosphere. The ε-caprolactam was dissolved within 30 min under stirring. 3.61 g m-xylylenediamine (26.5 mmol) were added and the mixture was homogenized. 21.4 g of the intermediate I1 (53.0 mmol) were added dropwise under stirring within 30 min in such a way that the temperature did not exceed 85 °C. Afterwards the mixture was stirred for 3 hours at 80 °C. The result is a transparent, yellowish product.

**E17:**

In a four-neck flask with stirrer, 21.0 g ε-caprolactam were added to 49.0 g of N-cyclohexylpyrrolidone under stirring. The mixture was heated up to 80 °C under nitrogen atmosphere. The ε-caprolactam was dissolved within 30 min under stirring. 4.33 g m-xylylenediamine (31.8 mmol) were added and the mixture was homogenized. 25.7 g of the intermediate I1 (63.6 mmol) were added dropwise under stirring within 30 min in such a way that the temperature did not exceed 85 °C. Afterwards the mixture was stirred for 3 hours at 80 °C. The result is a transparent, yellowish product.

**E18:**

In a four-neck flask with stirrer, 2.5 g pyrrolidin-2-on were added to 72.5 g of N-butylbutyrolactam under stirring. The mixture was heated up to 80 °C under nitrogen atmosphere. 3.61 g m-xylylenediamine (26.5 mmol) were added and the mixture was homogenized. 21.4 g of the intermediate I1 (53.0 mmol) were added dropwise under stirring within 30 min in such a way that the temperature did not exceed 85 °C. Afterwards the mixture was stirred for 3 hours at 80 °C. The result is a transparent, yellowish product.

**E19:**

In a four-neck flask with stirrer, 5.0 g pyrrolidin-2-on were added to 65.0 g of N-butylbutyrolactam under stirring. The mixture was heated up to 80 °C under nitrogen atmosphere. 4.33 g m-xylylenediamine (31.8 mmol) were added and the mixture was homogenized. 25.7 g of the intermediate I1 (63.6 mmol) were added dropwise under stirring within 30 min in such a way that the temperature did not exceed 85 °C. Afterwards the mixture was stirred for 3 hours at 80 °C. The result is a transparent, yellowish product.

**Storage Stability**

100 g of the inventive and non-inventive examples were stored at room temperature (23 °C) until any optical changes became noticeable. Optical changes include gelling of the material and/or formation of precipitate.

Table 3 Results

| Corresponding examples | Non-inventive and inventive Examples* | Storage Stability** |
|---|---|---|
| I | C1 | 2.0 days |
| | E1 | 6.0 months |
| | E18 | 1.5 months |
| II | C3 | < 1 day |
| | E2 | 8.0 months |
| | E3 | 8.0 months |
| | E19 | 1.0 month |
| III | C5 | 2.0 months |
| | E4 | 12.0 months |
| | E5 | 10.0 months |
| IV | C6 | 1.0 month |
| | E6 | 5.0 months |
| V | C8 | 1.0 month |
| | E7 | 3.0 months |
| VI | C10 | 2.0 months |
| | E8 | 6.0 months |
| VII | C11 | 2.0 months |
| | E9 | 6.0 months |
| VIII | C12 | 4.0 days |
| | E10 | 3.0 months |
| IX | C15 | 3.5 weeks |
| | E12 | 1.5 months |
| X | C16 | 1.0 day |
| | E13 | 3.5 weeks |

(continued)

| Corresponding examples | Non-inventive and inventive Examples* | Storage Stability** |
|---|---|---|
| XI | C17 | 1.5 weeks |
| | E14 | 1.5 months |
| XII | C18 | 1.0 day |
| | E15 | 1.5 weeks |
| XIII | C19 | 1.0 day |
| | E16 | 2.5 weeks |
| XIV | C20 | 1.0 day |
| | E17 | 1.5 weeks |
| *) The inventive and non-inventive examples sharing the same roman numeral are corresponding examples. The inventive example comprises a solvent and a cyclic amide comprising an amide NH group whereas the corresponding non-inventive example only contains the solvent. The inventive example and corresponding non-inventive example contain the same amount of a urea compound.<br>**) Time between synthesis and formation of precipitate or gelation. | | |

From table 3 it is visible that the inventive examples E 1- 19 show a significantly increased storage stability than their corresponding non-inventive examples.

## Application tests

Table 4 Raw materials

| Name | Description | Manufacturer |
|---|---|---|
| Acetone | Propan-2-on | Brenntag GmbH |
| Methylamylketone | 2-Heptanon | Sigma-Aldrich Chemie GmbH |
| Dowanol DPnB | Dipropylene glycol-n-butylether | DOW DEUTSCHLAND GmbH |
| Xylene | 1,3-Dimethylbenzene | OQEMA Contract GmbH |
| Oxsol 100 | Parachlorobenzotrifluoride | Univar Solutions Inc. |
| Tert. Butyl acetate (t-BuAc) | Acetic acid tert-butyl ester | Sigma-Aldrich Chemie GmbH |
| n-Butyl acetate (n-BuAc) | Acetic acid n-butyl ester | INEOS N.V. |
| Dowanol PMA | 2-Methoxy-1-methylethyl acetate | DOW DEUTSCHLAND GmbH |
| Paraloid B66 | 100% solid grade thermoplastic acrylic resin | DOW DEUTSCHLAND GmbH |
| Setalux DA 870 BA | Polyisocyanate cross-linking acrylic resin | Allnex GmbH |
| BYK-066 N | Solution of foam destroying polysiloxane | BYK-Chemie GmbH |
| Desmodur N 3390 BA | Aliphatic polyisocyanate (HDI trimer) | Covestro AG |
| Bayhydrol A145 | Hydroxyfunctional polyacrylic dispersion | Covestro AG |
| BYK-1711 | Polymer-based silicone-free defoamer | BYK-Chemie GmbH |
| BYK-346 | Solution of a polyether-modified polysiloxane | BYK-Chemie GmbH |
| DMEA | 2-Dimethylethanolamine (pre-diluted with DI water to a 10% solution) | Sigma-Aldrich Chemie GmbH |
| Bayhydur 3100 | Hydrophilic aliphatic polyisocyanate based on HDI | Covestro AG |
| Synthetic oil XP07 | paraffin alkane synthetic oil | Halliburton, SIP Ltd. |

(continued)

| Name | Description | Manufacturer |
|---|---|---|
| Petroleum LVT 200 | Mineral oil | Deep South Chemical Inc. |
| Shell Saraline 185V | mixture of alkanes of carbon chain length of predominantly C10 to C20 | Shell Chemicals Europe BV |
| Heptane | Hydrocarbon (isomeric mixture) | Sigma-Aldrich Chemie GmbH |
| n-Pentane | hydrocarbon | Sigma-Aldrich Chemie GmbH |
| Isopar H | Isoparaffinic hydrocarbons, C11-C12 | ExxonMobil Petroleum & Chemical BVBA |
| White spirit K30 | Hydrocarbons, C9-C12 | Julius Hoesch GmbH & Co. KG |

Test 1: Whitening of a waterbased 2-pack PU Clearcoat

Production of the waterbased 2-pack PU clearcoat was carried out using the formulation in table 5. All ingredients of component A were added under stirring conditions into a PE beaker and homogenised with a Dispermat LC3 (VMA Getzmann), 1000 rpm, 4 cm diameter toothed plate, 10 minutes at room temperature (23 °C). Afterwards the pH of component A was adjusted with DMEA solution (10% in water) to pH 8.2-8.5. Component B was produced under the same stirring conditions. Component A was divided into smaller amounts (50 g in 175 ml PE beaker) and the inventive samples were incorporated with a dosage of 0.5% by weight of the urea compound (calculated on the total clear coat) under stirring with Dispermat LC3 (VMA Getzmann), 1500 rpm, 2.5 cm diameter toothed plate, 5 minutes at room temperature (23 °C).

After storage at room temperature overnight, the hardener solution was added with the specified mixing ratio and homogenized by stirring with spatula. The samples were applied with a frame film applicator (BYK-Gardner GmbH) with 120 μm wet film thickness on glass and dried at room temperature for 1 week. For the whitening test, a household sponge (2 cm x 2 cm) soaked with water was placed for 24 hours on the lacquer film. Direct after removing of the sponge and drying the whitening of the coating film was evaluated visually with an evaluation scale from 1 - 5 (1 = no whitening, to 5 = strong whitening).

Table 5: Waterbased 2pack PU Clearcoat System

| Component A: | |
|---|---|
| Bayhydrol A145 | 82.5 g |
| BYK-1711 | 0.5 g |
| BYK-346 | 0.9 g |
| DI water | 16.1 g |
| | 100.0 g |

Dispermat: 10 min at 1000 rpm with 4 cm diameter toothed plate adjustment of the pH with DMEA solution, 10% in DI water to pH 8.2-8.5

| Component B: | |
|---|---|
| Bayhydur 3100 | 82.3 g |
| Dowanol PMA | 17.7 g |
| | 100.0 g |

Dispermat: 5 min at 1000 rpm with 4cm diameter toothed plate

Ratio Comp. A : Comp. B = 50 : 15 (wt./wt.), mixing with spatula

Table 6: Whitening results of the paint formulation

| Examples | Whitening |
|---|---|
| Control (without rheology additive) | 1 |
| C9 | 4 |
| E7 | 1 |

From table 6 it can be seen that it was surprisingly found that the application of the inventive example E7 shows no impact on the whitening of the waterbased clear coat whereas the application of the non-inventive example C9 leads to a significant worsening on the whitening.

Test 2: Whitening of a solventbased 2-pack PU Clearcoat

Production of the solventbased 2-pack PU clearcoat was carried out using the formulation in table 7. All ingredients of component A were added under stirring conditions into a PE beaker and homogenised with a Dispermat LC3 (VMA Getzmann), 1000 rpm, 4 cm diameter toothed plate, 10 minutes at room temperature (23 °C). Component A was divided into smaller amounts (50 g in 100 ml glass bottle) and the inventive samples were incorporated with a dosage of 0.5% by weight of the urea compound (calculated on the total clearcoat formulation) under stirring with Dispermat LC3 (VMA Getzmann), 1500 rpm, 2.5 cm diameter toothed plate, 5 minutes at room temperature (23 °C).

After storage at room temperature overnight, the hardener was added with the specified mixing ratio and homogenized by stirring with spatula. The samples were applied with a frame film applicator (BYK-Gardner GmbH) with 120 μm wet film thickness on glass and dried at room temperature for 1 week. For evaluation of the whitening, a water immersion test was carried out where the draw downs were placed for 1 week at 60 °C in a water bath Type 1004 (Gesellschaft für Labortechnik mbH). Direct after the samples were removed from the bath and dried, the whitening of the lacquer film was evaluated visually with an evaluation scale from 1 - 5 (for 1 = no whitening - 5 = strong whitening).

Table 7: Solvent based 2pack PU Clearcoat

| Component A: | |
|---|---|
| Setalux DA 870 BA | 80.0 g |
| n-Butyl acetate | 9.9 g |
| Dowanol PMA | 9.9 g |
| BYK-066 N | 0.2 g |
| | 100.0 g |

Dispermat: 10 min at 1000 rpm with 4 cm diameter toothed plate

| Component B: | |
|---|---|
| Desmodur N3390BA | 50.0 g |

Ratio Comp. A : Comp. B = 2 : 1 (wt./wt.), mixing with spatula

Table 8: Whitening results of the clearcoat formulation

| Examples | Whitening |
|---|---|
| Control (without rheology additive) | 1 |
| C2 | 5 |
| E1 | 1 |

Table 8 shows that the application of inventive example E1 shows no impact on the whitening of the solvent based clear coat whereas the application of the non-inventive example C2 leads to a significant worsening of the whitening.

Test 3: Sag resistance in a thermoplastic acrylic clearcoat

Production of the thermoplastic acrylic clearcoat was carried out using the formulation in table 9. All ingredients were added under stirring conditions into a PE beaker and homogenised with a Dispermat LC3 (VMA Getzmann), 1000 rpm, 4 cm diameter toothed plate, 15 minutes at room temperature (23 °C). The clearcoat was divided in smaller amounts (50 g in 100 ml glass bottle) and the inventive samples were incorporated with a dosage of 0.75% and 1.0% by weight of the urea compound (calculated on the total clearcoat) under stirring with Dispermat LC3 (VMA Getzmann), 1500 rpm, 2.5 cm diameter toothed plate, 5 minutes at room temperature (23 °C). After storage at room temperature overnight, the samples were applied for the sag resistance test with a stepped doctor blade Model 421/S (Erichsen GmbH & Co KG) with 50-500 µm respectively 550-1000 µm wet film thickness. The application was done on contrast cards 2801 (BYK-Gardner GmbH) using the automatic applicator byko-drive XL (BYK-Gardner GmbH) with an application speed of 50 mm/s. Directly after application, the draw down was hanged up vertically at room temperature until it was dry. After drying the visual evaluation of the sag resistance was done. Therefore, the wet film thickness was considered that shows after drying a clear separation of the draw down, no runners and no bulge building between the applied film thickness.

Table 9: Solvent based thermoplastic acrylic clearcoat

| | |
|---|---|
| Paraloid B66 | 25.0 g |
| Oxsol 100 | 48.7 g |
| Tert.-Butyl acetate | 11.3 g |
| Acetone | 15.0 g |
| | 100.0 g |

Dispermat: 15 min at 1000 rpm with 4 cm diameter toothed plate

Table 10: Sag resistance results of the clearcoat formulation

| Examples | Sag resistance [µm] | |
|---|---|---|
| | 0.75% urea component | 1.0% urea component |
| Control (without rheology additive) | < 50 | < 50 |
| C2 | 150 | 200 |
| E1 | 400 | 700 |

From table 10 it can be seen that the application of inventive example E1 shows a better sag resistance in the thermoplastic acrylic clearcoat than the application of non-inventive example C2.

Test 4: Gel strength and turbidity in various solvents

Various solvents according to table 11 were filled with an amount of 50 g into 100 ml glass bottles. The inventive samples were incorporated with a dosage of 1.0% by weight of the urea compound (calculated on the amount of the solvent) under stirring with Dispermat LC3 (VMA Getzmann), 1500 rpm, 2.5 cm diameter toothed plate, 5 minutes at room temperature (23 °C). After storage over night at room temperature (23 °C), the samples were evaluated regarding gel strength and turbidity The visual evaluation of the gel strength can vary from a strong gel - no gel (evaluation scale 1 (strong gel) - 5 (no gel) and the turbidity from non turbid - strong turbid (scale 1 (no turbidity - 5 (strong turbidity).

Table 11: Tested solvents

| | |
|---|---|
| Acetone | (Ac) |
| Methylamylketone | (MAK) |
| n-Butylpropionate | (n-BP) |
| Tert. Butyl acetate | (t-BuAc) |
| Oxsol 100 | (O100) |
| Xylene | (X) |
| Dowanol DPnB | (DPnB) |
| Dowanol PMA | (PMA) |

Table 12 Results Gel Strength

| | Examples * | Gel Strength | | | | |
|---|---|---|---|---|---|---|
| | | Ac | MAK | O 100 | X | PMA |
| | Control (without rheol. add.) | 5 | 5 | 5 | 5 | 5 |
| XV | C2 | 5 | 5 | - | 5 | - |
| | E1 | 3 | 1 | - | 1 | - |
| XVI | C14 | 4 | 3 | 4 | 4 | - |
| | E11 | 3 | 1 | 1 | 2 | - |
| XVII | C9 | 5 | - | - | - | - |
| | E7 | 3 | - | - | - | - |
| XVIII | C4 | 5 | - | - | 5 | 5 |
| | E2 | 1 | - | - | 1 | 1 |
| | E3 | 1 | - | - | 1 | 1 |
| XIX | C7 | - | - | - | 5 | 5 |
| | E6 | - | - | - | 3 | 3 |
| *) The inventive and non-inventive examples sharing the same roman numeral are corresponding examples. | | | | | | |

From table 12 it can be concluded that the inventive examples E1, E2, E3, E6, E7 and E11 lead to a better gel strength in the respective solvents than the comparative examples C2, C4, C7, C9 and C14.

Table 13 Results Turbidity

| | Examples* | Turbidity | | | | |
|---|---|---|---|---|---|---|
| | | MAK | n-BP | t-BuAc | X | DPnB |
| | Control (without rheol. add.) | 1 | 1 | 1 | 1 | 1 |
| XX | C2 | 5 | - | - | 5 | - |
| | E1 | 2 | - | - | 1 | - |
| XXI | C14 | 5 | 3 | 5 | - | - |
| | E11 | 3 | 2 | 2 | - | - |
| XXI | C9 | - | - | - | - | 5 |
| | E7 | - | - | - | - | 3 |
| XXII | C4 | - | - | - | 3 | - |
| | E2 | - | - | - | 1 | - |
| | E3 | - | - | - | 1 | - |
| XXIII | C7 | - | - | - | 2 | - |
| | E6 | - | - | - | 1 | - |
| *) The inventive and non-inventive examples sharing the same roman numeral are corresponding examples. | | | | | | |

From table 13 it can be concluded that the application examples comprising the inventive examples E1, E2, E3, E6, E7 and E11 show less turbidity in the respective solvents than the non-inventive examples C2, C4, C7, C9 and C14.

Test 5: Rheology effect in various oils and very low polar solvents

Various oils or very low polar solvents according to table 14 were filled with an amount of 50 g into 100 ml glass bottles. The inventive samples were incorporated with a dosage of 1.0% by weight of the urea compound (calculated on the

amount of the oil/solvent) under stirring with Dispermat LC3 (VMA Getzmann), 1500 rpm, 2.5 cm diameter toothed plate, 5 minutes at room temperature (23 °C). After storage over night at room temperature, the samples were evaluated regarding gel strength. The visual evaluation of the gel strength varies from a strong gel (1) - no gel (5).

Table 14: Tested oils and very low polar solvents

| | |
|---|---|
| Synthetic oil XP07 | (XP07) |
| Petroleum LVT 200 | (LVT) |
| Shell Saraline 185V | (185V) |
| Heptane | |
| Pentane | |
| Isopar H | (Iso H) |
| White spirit K30 | (K30) |

Table 15: Results of the gel strength in various oils / low polar solvents

| Examples | Gel strength | | | | | | |
|---|---|---|---|---|---|---|---|
| | XP07 | LVT | 185V | Heptane | Pentan e | Iso H | K30 |
| Control (without rheol. add.) | 5 | 5 | 5 | 5 | 5 | 5 | 5 |
| C13 | 5 | 5 | 5 | 5 | 5 | 5 | 5 |
| E10 | 1 | 1 | 2 | 2 | 1 | 1 | 1 |

From table 15 it can be seen that the inventive example E10 shows a better gel strength in the respective oils and low polar solvents than the non-inventive example C13.

## Claims

**1.** A composition comprising

- a cyclic amide comprising at least one amide NH group,
- a solvent, which is different from the cyclic amide comprising at least one amide NH group, and wherein the solvent comprises at least one of an amide group and a sulfoxide group, wherein the amide nitrogen of the amide group has two substituents, wherein the substituents are selected from aliphatic and aromatic groups, and
- a urea compound, having a number average molecular weight of at least 350 g/mol.

**2.** The composition according to claim 1, wherein the solvent comprises at least one of a N-substituted cyclic amide, non-cyclic dialkyl amide of mono- and difunctional carboxylic acids and sulfoxides.

**3.** The composition according to claim 1 or 2, wherein the cyclic amide consists of C, H, O and N atoms.

**4.** The composition according to any one of the preceding claims, wherein the cyclic amide has a molecular weight from 71 to 250 g/mol.

**5.** The composition according to any one of the preceding claims, wherein the cyclic amide comprises at most 2 amide groups.

**6.** The composition according to any one of the preceding claims, wherein the cyclic amide comprises at least one of ε-caprolactam, γ-butyrolactam, δ-valerolactam, and mixtures thereof.

**7.** The composition according to any one of the preceding claims, wherein the urea compound is a urea urethane.

**8.** The composition according to any one of the preceding claims, wherein the urea compound comprises at least 2 urea groups and at least 2 urethane groups.

**9.** The composition according to any one of the preceding claims, wherein the urea compound has a number average

molecular weight of from 400 g/mol to 30000 g/mol.

**10.** The composition according to any one of the preceding claims, wherein the composition is a liquid at 25 °C and 1013 mbar.

**11.** The composition according to any one of the preceding claims, wherein the composition comprises from 0.1 to 15.0 weight-% of a salt, calculated on the total weight of the cyclic amide, the at least one solvent, the urea compound, and the salt.

**12.** The composition according to any one of the preceding claims, wherein the composition comprises

1 - 60 weight-% of the cyclic amide comprising at least one amide NH group,
5 - 70 weight-% of the solvent, which is different from the cyclic amide comprising at least one amide NH group and wherein the solvent comprises at least one of a di-aliphatic-substituted amide group and a sulfoxide group
5 - 60 weight-% of the urea compound having a number average molecular weight of at least 350 g/mol
calculated on the total weight of the cyclic amide, the solvent and the urea compound.

**13.** Use of the composition according to any one of the preceding claims for controlling the rheology of a liquid composition, wherein the liquid composition is liquid at 23 °C and 1013mbar.

**14.** A liquid composition comprising the composition according to any one of the preceding claims 1 to 12 and a binder, wherein the liquid composition is liquid at 23 °C and 1013mbar.

**15.** A coated article, wherein at least a part of the surface of the article is coated with the liquid composition according to claim 14.

**Patentansprüche**

**1.** Zusammensetzung, umfassend

- ein cyclisches Amid mit mindestens einer Amid-NH-Gruppe,
- ein Lösungsmittel, das von dem cyclischen Amid mit mindestens einer Amid-NH-Gruppe verschieden ist, und wobei das Lösungsmittel mindestens eines von einer Amidgruppe und einer Sulfoxidgruppe umfasst, wobei der Amidstickstoff der Amidgruppe zwei Substituenten aufweist, wobei die Substituenten aus aliphatischen und aromatischen Gruppen ausgewählt sind, und
- eine Harnstoffverbindung mit einem zahlenmittleren Molekulargewicht von mindestens 350 g/mol.

**2.** Zusammensetzung nach Anspruch 1, wobei das Lösungsmittel mindestens eines von einem N-substituierten cyclischen Amid, einem nichtcyclischen Dialkylamid von mono- und difunktionellen Carbonsäuren und Sulfoxiden umfasst.

**3.** Zusammensetzung nach Anspruch 1 oder 2, wobei das cyclische Amid aus C-, H-, O- und N-Atomen besteht.

**4.** Zusammensetzung nach einem der vorhergehenden Ansprüche, wobei das cyclische Amid ein Molekulargewicht von 71 bis 250 g/mol aufweist.

**5.** Zusammensetzung nach einem der vorhergehenden Ansprüche, wobei das cyclische Amid höchstens 2 Amidgruppen umfasst.

**6.** Zusammensetzung nach einem der vorhergehenden Ansprüche, wobei das cyclische Amid mindestens eines von ε-Caprolactam, γ-Butyrolactam, δ-Valerolactam und Mischungen davon umfasst.

**7.** Zusammensetzung nach einem der vorhergehenden Ansprüche, wobei es sich bei der Harnstoffverbindung um ein Harnstoffurethan handelt.

**8.** Zusammensetzung nach einem der vorhergehenden Ansprüche, wobei die Harnstoffverbindung mindestens 2 Harnstoffgruppen und mindestens 2 Urethangruppen umfasst.

9. Zusammensetzung nach einem der vorhergehenden Ansprüche, wobei die Harnstoffverbindung ein zahlenmittleres Molekulargewicht von 400 g/mol bis 30.000 g/mol aufweist.

10. Zusammensetzung nach einem der vorhergehenden Ansprüche, wobei die Zusammensetzung bei 25 °C und 1013 mbar eine Flüssigkeit ist.

11. Zusammensetzung nach einem der vorhergehenden Ansprüche, wobei die Zusammensetzung 0,1 bis 15,0 Gew.-% eines Salzes, berechnet auf das Gesamtgewicht des cyclischen Amids, des mindestens einen Lösungsmittels, der Harnstoffverbindung und des Salzes, umfasst.

12. Zusammensetzung nach einem der vorstehenden Ansprüche, wobei die Zusammensetzung Folgendes umfasst:

1 - 60 Gew.-% des cyclischen Amids mit mindestens einer Amid-NH-Gruppe,
5 - 70 Gew.-% des Lösungsmittels, das von dem cyclischen Amid mit mindestens einer Amid-NH-Gruppe verschieden ist, und wobei das Lösungsmittel mindestens eines von einer dialiphatisch substituierten Amidgruppe und einer Sulfoxidgruppe umfasst,
5 - 60 Gew.-% der Harnstoffverbindung mit einem zahlenmittleren Molekulargewicht von mindestens 350 g/mol, berechnet auf das Gesamtgewicht des cyclischen Amids, des Lösungsmittels und der Harnstoffverbindung.

13. Verwendung der Zusammensetzung nach einem der vorhergehenden Ansprüche zur Steuerung der Rheologie einer flüssigen Zusammensetzung, wobei die flüssige Zusammensetzung bei 23 °C und 1013 mbar flüssig ist.

14. Flüssige Zusammensetzung, umfassend die Zusammensetzung nach einem der vorhergehenden Ansprüche 1 bis 12 und ein Bindemittel, wobei die flüssige Zusammensetzung bei 23 °C und 1013 mbar flüssig ist.

15. Beschichteter Gegenstand, wobei mindestens ein Teil der Oberfläche des Gegenstands mit der flüssigen Zusammensetzung nach Anspruch 14 beschichtet ist.

## Revendications

1. Composition comprenant

- un amide cyclique comprenant au moins un groupe amide NH,
- un solvant, qui est différent de l'amide cyclique comprenant au moins un groupe amide NH, et dans laquelle le solvant comprend au moins l'un parmi un groupe amide et un groupe sulfoxyde, l'azote d'amide du groupe amide ayant deux substituants, les substituants étant choisis parmi des groupes aliphatiques et aromatiques, et
- un composé urée ayant un poids moléculaire moyen en nombre d'au moins 350 g/mol.

2. Composition selon la revendication 1, dans laquelle le solvant comprend au moins l'un parmi un amide cyclique N-substitué, un dialkylamide non cyclique d'acides carboxyliques mono- et difonctionnels et des sulfoxydes.

3. Composition selon la revendication 1 ou 2, dans laquelle l'amide cyclique est constitué d'atomes de C, H, O et N.

4. Composition selon l'une quelconque des revendications précédentes, dans laquelle l'amide cyclique a un poids moléculaire de 71 à 250 g/mol.

5. Composition selon l'une quelconque des revendications précédentes, dans laquelle l'amide cyclique comprend au plus 2 groupes amide.

6. Composition selon l'une quelconque des revendications précédentes, dans laquelle l'amide cyclique comprend au moins l'un parmi ε-caprolactame, γ-butyrolactame, δ-valérolactame et leurs mélanges.

7. Composition selon l'une quelconque des revendications précédentes, dans laquelle le composé urée est un uréthane urée.

8. Composition selon l'une quelconque des revendications précédentes, dans laquelle le composé urée comprend au moins 2 groupes urée et au moins 2 groupes uréthane.

**9.** Composition selon l'une quelconque des revendications précédentes, dans laquelle le composé urée a un poids moléculaire moyen en nombre de 400 g/mol à 30 000 g/mol.

**10.** Composition selon l'une quelconque des revendications précédentes, dans laquelle la composition est un liquide à 25 °C et 1 013 mbar.

**11.** Composition selon l'une quelconque des revendications précédentes, dans laquelle la composition comprend de 0,1 à 15,0 % en poids d'un sel, calculé sur la base du poids total de l'amide cyclique, de l'au moins un solvant, du composé urée et du sel.

**12.** Composition selon l'une quelconque des revendications précédentes, dans laquelle la composition comprend

1 - 60 % en poids de l'amide cyclique comprenant au moins un groupe amide NH,
5 - 70 % en poids du solvant, qui est différent de l'amide cyclique comprenant au moins un groupe amide NH et dans laquelle le solvant comprend au moins l'un parmi un groupe amide di-substitué aliphatique et un groupe sulfoxyde
5 - 60 % poids du composé urée ayant un poids moléculaire moyen en nombre d'au moins 350 g/mol
calculé sur la base du poids total de l'amide cyclique, du solvant et du composé urée.

**13.** Utilisation de la composition selon l'une quelconque des revendications précédentes pour réguler la rhéologie d'une composition liquide, dans laquelle la composition liquide est liquide à 23 °C et 1 013 mbar.

**14.** Composition liquide comprenant la composition selon l'une quelconque des revendications 1 à 12 précédentes et un liant, dans laquelle la composition liquide est liquide à 23 °C et 1 013 mbar.

**15.** Article revêtu, dans lequel au moins une partie de la surface de l'article est revêtue par la composition liquide selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1188779 A
- DE 102008059702 A
- WO 2015158407 A
- EP 1396510 A1
- US 7250487 B2
- US 7348397 B2
- EP 2292675 A1